# EUROPEAN PATENT SPECIFICATION

(11) **EP 0 853 410 B1**
(45) Date of publication and mention of the grant of the patent: **15.10.2003**
(21) Application number: 98300070.4
(22) Date of filing: 07.01.1998
(51) Int. Cl.: H04L 27/26

(54) **Fine position of the FFT window in multicarrier receivers**
Feine Einrastung des FFT-Fensters in Mehrträgerempfängern
Positionnement précis du fenêtre FFT dans des récepteurs de signaux multiporteurs

(30) Priority: 10.01.1997 KR 9700535
(43) Date of publication of application: 15.07.1998
(73) Proprietor: Samsung Electronics Co., Ltd., Suwon City, Kyungki-do (KR)
(72) Inventor: Kim, Dong-kyu, Sooyoung-gu, Pusan-city (KR); Do, Sang-hyun, Songpa-gu, Seoul (KR); Choi, Hyung-jin, Chamsil-dong, Songpa-gu, Seoul (KR); Lee, Myeong-hwan, Paldal-gu, Suwon-city, Kyungki-do (KR)
(74) Representative: Robinson, Ian Michael

(56) References cited:
- WO-A-95/19671
- WO-A-96/02991
- US-A- 3 956 623

## Description

The present invention relates to an orthogonal frequency division multiplexer (OFDM) system, and more particularly, to a fine fast Fourier transform (FFT) window position recovery apparatus of an OFDM receiver.

In order to recover an OFDM signal, for example from European digital broadcasts transmitted from a transmitter, time synchronization should be performed accurately. The time synchronization includes an FFT window position recovery for a parallel process of a correct signal and a sampling clock recovery for controlling the sampling clock signal of an analog-to-digital converter (ADC) for sampling a portion in which the signal-to-noise ratio (SNR) is highest in a received signal.

Document WO 95/19671 discloses an arrangement for synchronizing an OFDM receiver. A control signal is derived from the demodulated synchronisation symbols and it is used for controlling the sampling clock. The linear shift of the FFT transformed signal is therefore reduced.

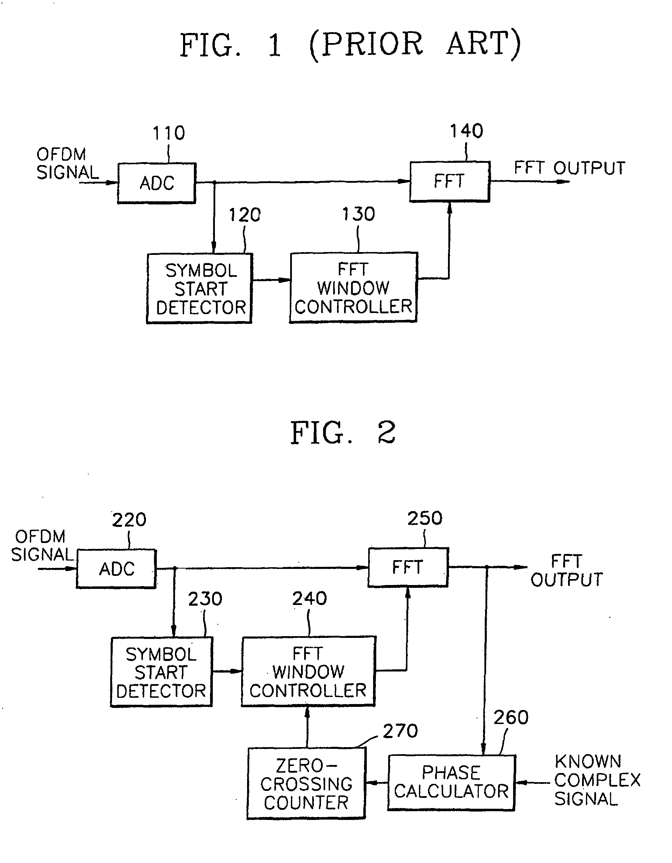

Figure 1 is a block diagram showing the structure of a conventional OFDM system receiving apparatus, which includes an ADC 110 for converting a received OFDM analog signal into a digital signal, a symbol start detector 120 for detecting the start of a symbol among the samples output from the ADC 110, an FFT window controller 130 for generating an FFT window control signal by a symbol start signal output from the symbol start detector 120, and an FFT 140 for fast Fourier transforming the data generated in the ADC 110 according to the FFT window control signal generated from the FFT window controller 130.

A symbol of an OFDM signal includes a guard interval having G sample lengths interposed between symbols in order to prevent an interference between N effective data samples which are the outputs of an inverse fast Fourier transform (IFFT) and the symbols when there are N FFTs. Namely, a guard interval copies the rear portion of an effective data section. A transmitter (not shown) transmits a symbol including (G+N) samples obtained by adding N complex values to G complex values output from an IFFT (not shown).

### [Equation 1]

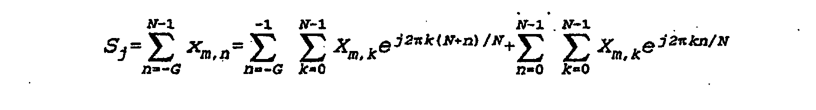

The Equation 1 represents a mth symbol formed of the complex value output from the FFT 140. Here, m, k, N, and n respectively represent a symbol number, a subcarrier number (index), the number of samples of the effective data, and a sample time. In Equation 1, the first term, 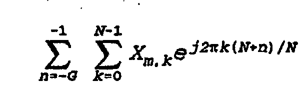 , represents a guard interval and the second term, 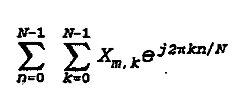 , represents effective data.

As shown in Figure 1, the received OFDM signal is converted into digital data by the analog-digital converter (ADC) 110. In the sampled OFDM signal output from the ADC 110, the start of a symbol is detected by the symbol start detector 120 for detecting the position in which the cross-correlation value of a received signal is highest. The second term is sequentially input to the FFT 140 after the guard interval, which is the first term of Equation 1, is removed. An FFT window controller 130 designates the FFT window starting position of the FFT 140 using symbol start information of the symbol start detector 120. Here, the first value of a transmitting IFFT (not shown) must be input to the first of the FFT 140. The value output from the Nth of the IFFT must be input to the Nth of the FFT 140. The first value output from the IFFT of the transmitter must be input to the FFT 140 after searching for the start of a symbol in the receiver. The symbol start detector 120 detects the start of the symbol in an initial stage as mentioned above. However, the symbol start detector 120 may not correctly estimate the start of a symbol due to a fading phenomenon of a receiver and the influence of its surroundings when the receiver is moving. Accordingly, the Nth value or the second value of the previous symbol is input to the first of the FFT 140. Therefore, one value may be pushed or pulled and input to the FFT port. When the start of a symbol is not correctly estimated, the symbol cannot be correctly recovered. Accordingly, the performance of the system deteriorates.

It is an aim of at least preferred embodiments of the present invention to provide a fast Fourier transform (FFT) window position recovery apparatus having improved phase error recovery.

According to a first aspect of the present invention, there is provided a fine FFT window position recovery apparatus for an OFDM receiver for recovering a fast Fourier transform (FFT) window position using a symbol including N effective data samples and G samples representing a guard interval, comprising: an analog-to-digital converter (220) for converting an OFDM signal into a digital complex sample; a symbol start detector (230) for detecting the starting portion of the symbol among the digital complex samples output from the analog-digital converter; an FFT window controller (240) for activating an FFT means according to the symbol starting portion detected from the symbol start detector (230); and an FFT means (250) for fast Fourier converting the digital complex sample generated from the analog-to-digital converter according to the FFT window controller (240) output; characterised by: a phase calculator (260) for calculating phase variations between the complex value output from the FFT means (250) and the known transmitted complex value for the respective subcarrier; a zero-crossing counter (270) for counting the number of zero-crossings of the phase variations generated from the phase calculator; and said FFT window controller (240) being arranged to compensate for the sample error of the FFT means by detecting the remaining FFT position error of a sample unit from the number of zero-crossings generated by the zero-crossing counter.

According to a second aspect of the present invention, there is provided a fine FFT window position recovery apparatus for an OFDM receiver for recovering an FFT window position using a symbol including N effective data samples and G samples representing a guard interval as a unit, comprising: an analog-to-digital converter (330) for converting an OFDM signal into a digital complex sample; a symbol start detector (340) for detecting the starting portion of the symbol among the digital complex samples output from the analog-to-digital converter (330); an FFT window controller (350) for activating an FFT means (360) according to the symbol starting portion detected from the symbol start detector; and an FFT means (360) for fast Fourier converting -the complex digital sample generated from the analog-digital converter (330) according to the FFT window controller (350) output; characterised by: a zero-crossing counter (370) for counting the number of zero-crossings of the amplitude of at least one of the function realising the real part of the complex signal output from the FFT means and the function realising the imaginary part of the complex signal output from the FFT means; and said FFT window controller (350) being arranged to compensate for the sample error of the FFT means (360) by detecting the remaining FFT position error of a sample unit from the number of zero-crossings generated from the zero-crossing counter (370).

For a better understanding of the invention, and to show how embodiments of the same may be carried into effect, reference will now be made, by way of example, to the accompanying diagrammatic drawings, in which:
Figure 1 is a block diagram showing the structure of a conventional OFDM system receiving apparatus; and
Figure 2 is a block diagram showing a first embodiment of a fine FFT window position recovering apparatus of an OFDM system receiver according to the present invention;
Figure 3 is a block diagram showing a second embodiment of a fine FFT window position recovering apparatus of an OFDM system receiver according to the present invention;
Figures 4a through 4d are graphs showing phase variations between transmitted and received complex signal values according to the error of a window position in the apparatus shown in Figure 2;
Figures 5a through 5d are graphs showing changes in the real part of an FFT output value according to a window position error in the apparatus shown in Figure 3; and
Figures 6a through 6d are graphs showing changes in the imaginary part of an FFT output value according to a window position error in the apparatus shown in Figure 3.

The apparatus shown in Figure 2 is a first embodiment of the preferred fine FFT window position recovering apparatus for an OFDM system receiver. The apparatus includes an ADC 220 for converting a received OFDM signal into a digital complex sample, a symbol start detector 230 for detecting the start of a symbol among the samples output from the ADC 220, an FFT 250 for fast Fourier transforming samples generated from the ADC 220, a phase calculator 260 for calculating a phase variation between the complex value output from the FFT 250 and the value known to the transmitter and the receiver, a zero-crossing counter 270 for counting the number of zero-crossings by the phase calculated in the phase calculator 260, and an FFT window controller 240 for designating the FFT start position of the FFT 250 from the symbol start signal detected from the symbol start detector 230 and the number of zero-crossings generated by the zero-crossing counter 270.

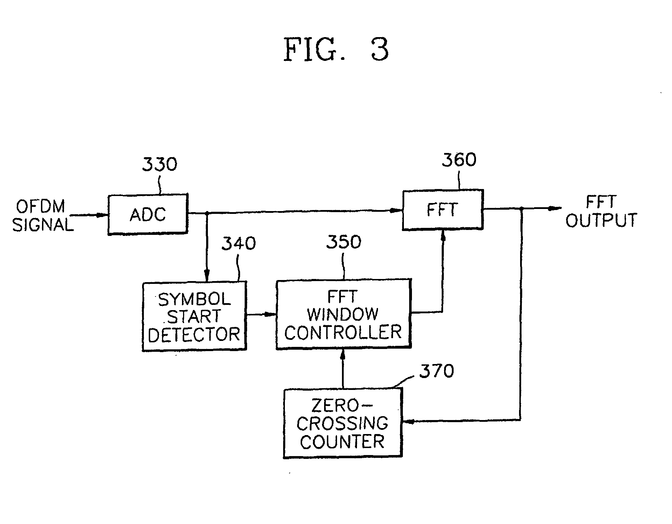

The apparatus shown in Figure 3 is a second embodiment of the preferred fine FFT window position recovering apparatus of an OFDM system receiver. The apparatus includes an ADC 330 for converting the received OFDM signal into a complex digital sample, a symbol start detector 340 for detecting the start of a symbol among the samples output from the ADC 330, an FFT 360 for fast Fourier transforming data generated from the ADC 330 according to the symbol start signal detected from the symbol start detector 340, a zero-crossing counter 370 for counting zero-crossings of an amplitude output from the FFT 360, and an FFT window controller 350 for designating an FFT activating position area of the FFT 360 from the symbol start signal detected from the symbol start detector 340 and the number of zero-crossings generated by the zero-crossing counter 370.

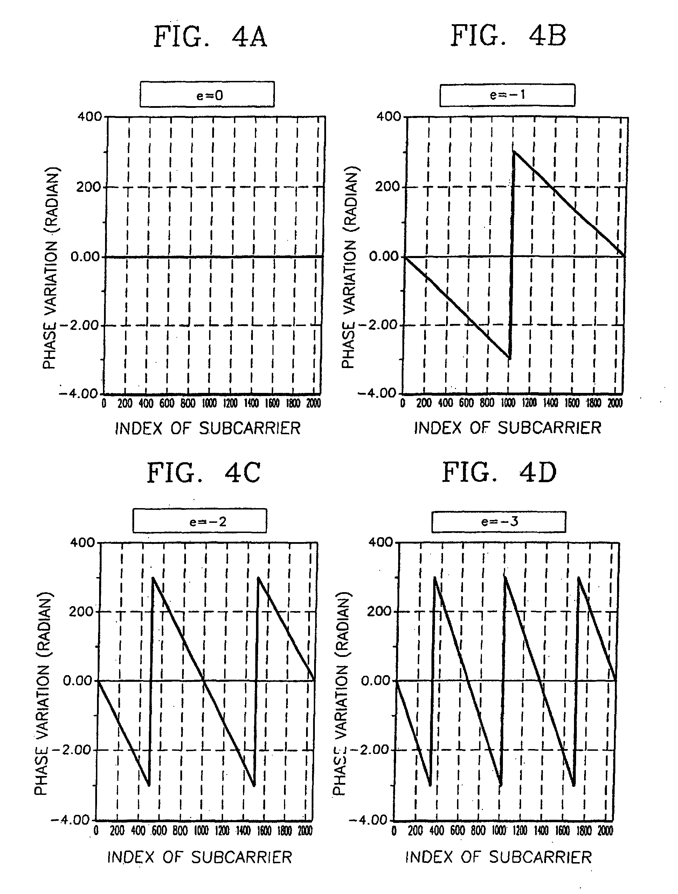

Figures 4a through 4d are graphs showing phase variation between the transmitted and received signal values according to a window position error (e=0, -1, -2, and -3) in the phase calculator 260 of Figure 2. When the subcarrier index numbers 0 through 2047 are sequentially detected, a sample position error does not exist, as shown by the graph of Figure 4a, since a phase difference is not generated. Figures 4b through 4d are graphs showing states in which a phase difference is generated since an error (e=-1, -2, and -3) in a sample is generated. In the graphs of Figures 4a to 4d, the x-axis represents the index of a subcarrier and a y-axis represents the magnitude of a phase variation.

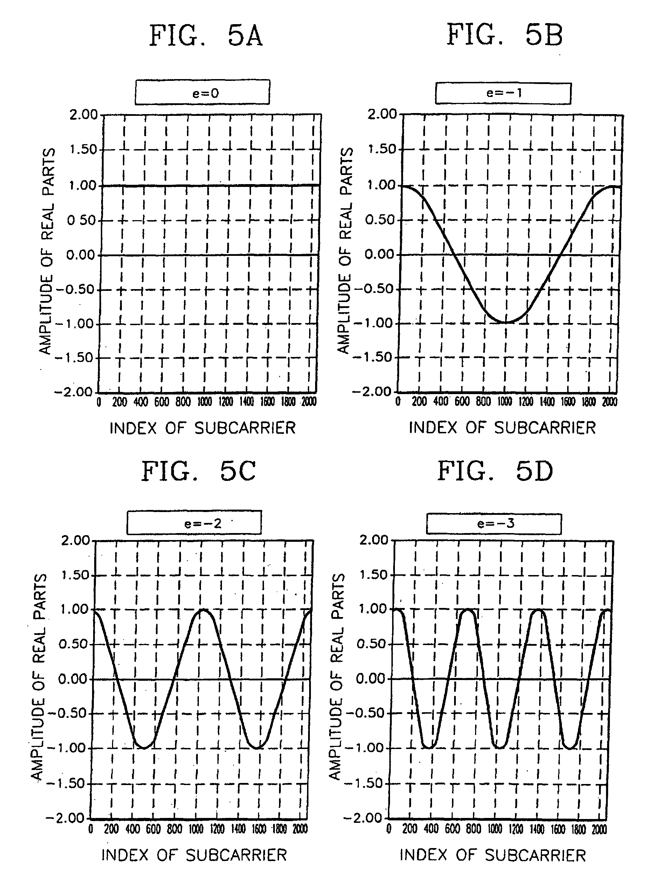

Figures 5a through 5d are graphs showing changes in the real part of the FFT output value according to the window position error (e=0, -1, -2, and -3) of Figure 3. When the subcarrier index numbers 0 through 2047 are sequentially detected, the amplitude does not change, as shown in Figure 5a, since a sample position error does not exist when a (1,0) value is transmitted from the transmitter. Figures 5b through 5d are graphs showing the real part the amplitude which changes since an error (e=-1, -2, and -3) in a sample is generated. In the graphs of Figures 5a to 5d, the x-axis represents the index of a subcarrier and the y-axis represents the magnitude of the real part.

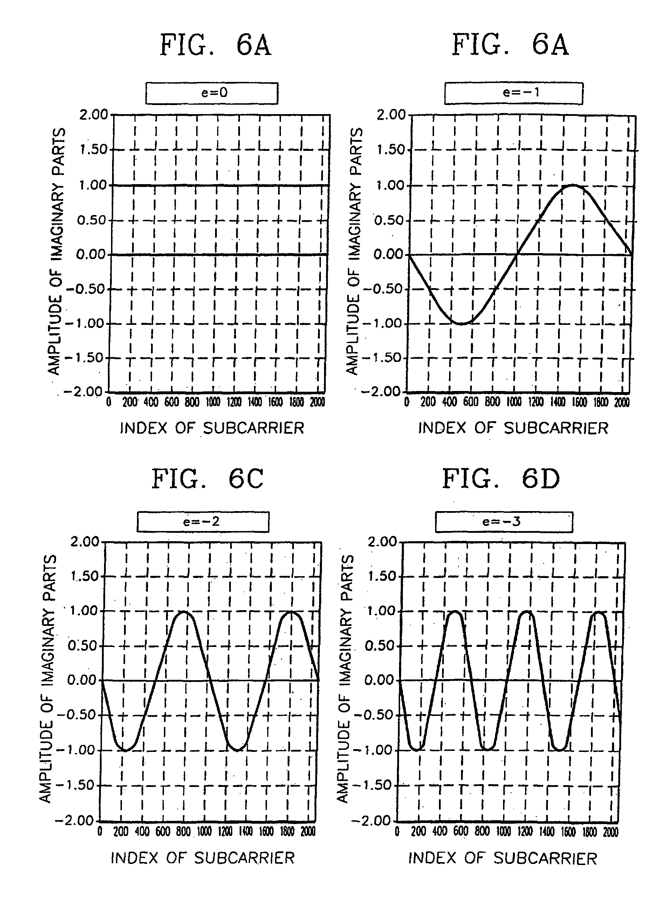

Figures 6a through 6d are graphs showing changes in the imaginary part of the FFT output value according to the window position error of Figure 3. When the subcarrier index numbers 0 through 2047 are sequentially detected, the amplitude does not change, as shown in Figure 6a, since a sample position error does not exist when a (1,0) value is transmitted from the transmitter. Figures 6b through 6d are sample graphs showing an imaginary part the amplitude which changes since a position error in a sample is generated. In the graphs of Figures 6a to 6d, the x-axis represents the index of a subcarrier and the y-axis is the magnitude of an imaginary part.

The operation and effect of the preferred embodiments of the present invention will be described as follows.

As shown in Figure 2, the received OFDM signal is converted into complex samples through the ADC 220 and is sequentially input to the FFT 250. The symbol start detector 230 detects the start of a symbol using the samples output from the ADC 220 and applies a symbol start signal to the FFT window controller 240. The FFT 250 demodulates the signal of each subcarrier modulated by the IFFT of a transmitting port to FFT and fast Fourier transform the samples of a second term sequentially input after removing the first term of right-hand side of Equation 1 on the basis of the symbol start signal applied from the symbol start detector 230. The phase calculator 260 calculates the phase variation between the complex signal value known to the transmitter and receiver with respect to a specific subcarrier and the complex signal value output from the FFT 250 after being received through the specific subcarrier in every subcarrier index. Here, the known complex signal value is stored in a specific storage means (not shown) such as a ROM. In the case that an error is generated in the symbol start detection of the symbol start detector 230, a phase variation is generated in each subcarrier, thus deteriorating the performance of a receiver. At this time, the magnitude of the phase variation differs according to the subcarrier index. [Equation 2]${\text{ϕ}}_{\text{MAX}} \text{=} \text{e} \text{.2π}$

### [Equation 3]

${\text{ϕ}}_{\text{k}} \text{=} \frac{\text{e} \text{.2π.} \text{k}}{\text{N}} \text{,} \text{k} \text{=0,1,...,} \text{N} \text{-1}$

Equations 2 and 3 represent the magnitude of the maximum phase variation according to the error of a symbol start detection and the magnitude of a phase variation generated in each subcarrier. Here, *e* represents the magnitude of an FFT symbol position recovery error, a unit is a sample, and k represents the subcarrier index. It is noted from the Equations 2 and 3 that the maximum phase variation is generated in the complex signal value of the subcarrier having the maximum frequency since the degree of a phase variation is smaller with respect to the same symbol position recovery error as the subcarrier index is lower (a frequency is lower) and the degree of the phase variation becomes larger as the frequency becomes higher.

Figures 4a through 4d show the phase variation according to the FFT symbol position recovery error in the case that a transmitter transmits the same complex value using every subcarrier. The phase variation of the complex value corresponding to each subcarrier is shown in Equation 4.

### [Equation 4]

${\text{ϕ}}_{\text{k}} {\text{=tan}}^{\text{-1}} {\text{{Im(Y}}_{\text{k}} \text{.} {\text{X}}_{\text{k}}^{\text{*}} \text{)} \text{/} {\text{Re(Y}}_{\text{k}} \text{.} {\text{X}}_{\text{k}}^{\text{*}} \text{)}}$

In Equation 4, k, X, Y, *Re(Y*_{*k*}.*X*^{***}_{*k*}) and *Im(Y*_{*k*}.*X*^{***}_{*k*}*)*, and * respectively denote a subcarrier number, a complex value known to the transmitter and receiver, a received complex value, the real part and the imaginary part of the complex value, and the conjugate value of the complex value.

The shape of an estimated phase variation ϕ_{*k*} according to the FFT window position recovery error can be characterized through the number of zero-crossings of *ϕ*_{*k*}. The zero-crossing counter 270 counts the number of zero-crossings of the variations calculated in the phase calculator 260 by detecting changes in the sign. The number of zero-crossings is represented by Equation 5.

### [Equation 5]

$\text{a} \text{=2} \text{e} \text{-1}$ wherein, a and e respectively denote the number of zero-crossings and a sample error. For example, when a transmitter transmits a complex value known between the transmitter and the receiver and a receiver performs fast Fourier transform in the FFT 250 without a window recovery error, a phase difference is not generated in Figure. 4a since a phase variation is not generated between received data and known data. However, different phase variations are generated from the index 0 to the index 2047(0,...,N-1) of the subcarrier between the received data and the known data as shown in Figure 4b when one sample error (e=-1) is generated. The degree of the phase variation increases as the subcarrier index becomes larger. The maximum phase variation whose magnitude is 360 degrees (2π radian) is generated in the maximum index 2047(N-1) (360 degrees are shown as 0 degree since the tan⁻¹ function is used in the formula 4 in Figure 4b). Also, in the case that two sample errors (e=-2) are generated, the zero-crossing is generated (2e-1) times the sample error (e), as shown in Equation 5, since the maximum phase variation generated in the index N has the magnitude of 720 degrees which are double 360 degrees. The FFT window position recovery error can be estimated in a sample unit by sequentially detecting the number (a) of zero-crossings of the complex symbol of the subcarrier in the zero-crossing counter 270. Namely, the sample error (e) becomes (a+1)/2 as shown in Equation 5. The FFT window controller 240 designates a position in which the FFT is activated from the start of a symbol detected from the symbol start detector 230, corrects the start of a symbol by calculating the error (e) of a sample unit of the remaining FFT from the number of zero-crossings generated by the zero-crossing counter 270, and changes the position in which the FFT is activated by the corrected start of a symbol. Also, the FFT window controller 240 must determine an error sign after estimating the magnitude of the FFT window position error. Namely, it must be determined whether the FFT window position of a receiver precedes or follows a correct FFT window point of time. For example, Figure 4b shows phase variations generated in the respective subcarriers in the case that the FFT window error is -1. In the case that the FFT window error is +1 sample, the phase variation generated in the respective subcarriers is symmetric with respect to an X axis whose variation is 0, as shown in Figure. 4b. Therefore, a sign can be determined by detecting the change of the sign from positive (+) to negative (-) or from negative (-) to positive (+) at the position in which zero-crossing is performed from the index 0 of the subcarrier. However, in the case that a phase offset which is a phase difference between the RF subcarriers of a transmitter and a receiver exists in an initial stage of a system, the zero-crossing position moves horizontally since the phase offset is added to the phase variation with respect to the FFT window position error. At this time, in the case that the amount of movement is large, a method for determining the sign of the FFT window position error cannot be used anymore. The following method can be used in order to complement this point. Even if the FFT window error exists as shown in Figures 4b, 4c, and 4d, there is little phase variation in the subcarrier indexes 0 and (N-1). Therefore, the FFT window controller 240 can remove the influence of the phase offset by subtracting the phase variation values of number 0 from the phase variation values of the subcarriers indexes from 0 to (N-1) obtained from the phase calculator 260 of Figure 2, thus correctly determining the sign of the FFT window position error using the change of the sign in the position in which the zero-crossing is performed.

Also, it is possible to improve a transfer efficiency and to reduce the load of the phase calculator 260 of Figure 2 by using some specific subcarriers instead of all the subcarriers for estimating errors. However, the range in which errors can be estimated is inversely proportional to the distance between the selected subcarriers. Since a vibration of a small range is generated in the position in which the zero-crossing is generated due to the vibration of the complex value caused by the phase error of the sampling clock of the receiver ADC and the influence of noise caused by additive white Gaussian noise surroundings, undesired zero-crossing can be generated. It is possible to estimate the number of zero-crossings by counting the number of changes in the sign using the change of signs of maximum and minimum values of an amplitude.

In Figure 3, the change in the amplitude of the real part or the imaginary part of the received complex value output from the FFT 360 is calculated by the zero-crossing counter 370. The zero-crossing counter 370 counts the number of zero-crossings by selecting the amplitudes of the real part or the imaginary part through the change in the amplitude of the real part or the imaginary part of the complex signal value output from the FFT 360. The relationship shown in Equation 6 is established in the number of zero-crossings of the estimated phase variation values obtained by calculating the complex value output from the FFT 360. The change in the amplitudes of the real part and the imaginary part is shown in Figures 5b, 5c, 5d, 6b, 6c, and 6d.

### [Equation 6]

$\text{γ=2} \text{e} \text{=} \text{a} \text{+1}$

### [Equation 7]

$\text{i} \text{=2} \text{e} \text{-1=} \text{a}$ γ and *i* represent the number of zero-crossings of the real part and the imaginary part of the received complex value output from the FFT 360 in Equations 6 and 7. It is possible to lower the complexity of a system using the number of the zero-crossings of the received value output from the FFT 360 without detecting the number of zero-crossings by the estimated phase variation value obtained by calculating the phase variation between the transmitted and received complex values. The FFT window controller 350 designates the position in which the FFT is activated from the symbol starting portion detected from the symbol start detector 340, calculates the remaining FFT position error (e) of a sample unit by Equations 6 and 7 with the number of zero-crossings generated by the zero-crossing counter 370, controls the sample position in which the error is generated, and performs a fine position recovery error.

It is therefore possible to guarantee the reliability of a system by correcting the phase error of the FFT window using the number of zero-crossings of the phase variation calculated between the transmitted and received complex values and the number of the zero-crossings of the amplitude of the real part or the imaginary part of the received complex value even if the FFT window position recovery error is generated.

## Claims

1. A fine FFT window position recovery apparatus for an OFDM receiver for recovering a fast Fourier transform (FFT) window position using a symbol including N effective data samples and G samples representing a guard interval, comprising:
an analog-to-digital converter (220) for converting an OFDM signal into digital complex samples;
a symbol start detector (230) for detecting the starting portion of the symbol among the digital complex samples output from the analog-digital converter;
an FFT window controller (240) for activating an FFT means according to the symbol starting portion detected from the symbol start detector (230); and
an FFT means (250) for fast Fourier converting the digital complex samples generated from the analog-to-digital converter according to the FFT window controller (240) output;
**characterised by**:
a phase calculator (260) for calculating phase variations between the complex value output from the FFT means (250) and the known transmitted complex value for the respective subcarrier;
a zero-crossing counter (270) for counting the number of zero-crossings of the phase variations generated from the phase calculator; and
said FFT window controller (240) being arranged to compensate for the sample error of the FFT means by detecting the remaining FFT position error of a sample unit from the number of zero-crossings generated by the zero-crossing counter.

2. The fine FFT window position recovery apparatus as claimed in claim 1, wherein the phase variation of the phase calculator (260) is calculated by tan⁻¹*{Im(Y*_{*k*}.*X*^{***}_{*k*})/*Re(Y*_{*k*}.*X*^{***}_{*k*}*)}*, wherein K, X, Y, *Re*(...) and *Im*(...), and * respectively denote the number of a subcarrier, a transmitted complex value which is known to the transmitter and the receiver, a received complex value, the real part and the imaginary part of the complex value, and the conjugate of the complex value.

3. The fine FFT window position recovery apparatus as claimed in claim 1 or 2, wherein the zero-crossing counter (270) counts the zero crossing point of the phase variation sequentially detected through the numbers 1 through N of the subcarrier.

4. The fine FFT window position recovery apparatus as claimed in claim 1, 2 or 3 wherein the sample error e of the FFT window controller (240) is (a+1)/2, wherein a is the number of zero-crossings.

5. The fine FFT window position recovery apparatus as claimed in claim 1, 2, 3 or 4 wherein the FFT window controller (240) determines an FFT window position error sign using the change in the sign in the position in which the zero-crossing is performed.

6. The fine FFT window position recovery apparatus as claimed in claim 5, wherein the FFT window position error controller (240) is arranged to determine said error sign after subtracting the phase variation values of the number 0 of the subcarrier from the phase variation values of all numbers of the subcarrier.

7. A fine FFT window position recovery apparatus for an OFDM receiver for recovering an FFT window position using a symbol including N effective data samples and G samples representing a guard interval as a unit, comprising:
an analog-to-digital converter (330) for converting an OFDM signal into digital complex samples;
a symbol start detector (340) for detecting the starting portion of the symbol among the digital complex samples output from the analog-to-digital converter (330);
an FFT window controller (350) for activating an FFT means (360) according to the symbol starting portion detected from the symbol start detector; and
an FFT means (360) for fast Fourier converting the complex digital samples generated from the analog-digital converter, (330) according to the FFT window controller (350) output;
**characterised by**:
a zero-crossing counter (370) for counting the number of zero-crossings of the amplitude of at least one of the function realising the real part of the complex signal output from the FFT means and the function realising the imaginary part of the complex signal output from the FFT means; and
said FFT window controller (350) being arranged to compensate for the sample error of the FFT means (360) by detecting the remaining FFT position error of a sample unit from the number of zero-crossings generated from the zero-crossing counter (370).

8. The fine FFT window position recovery apparatus as claimed in claim 7 wherein the sample error e of the FFT window controller (350) is (r+1)/2 when said real part is selected, wherein r is the number of zero-crossings of the amplitude of said real part.

9. The fine FFT window position recovery apparatus as claimed in claim 7 or wherein the sample error e of the FFT window controller (350) is (i+1)/2 when said imaginary part is selected, wherein i is the number of zero-crossings of the amplitude of said imaginary part.

## Patentansprüche

1. Vorrichtung zur Rückgewinnung einer FFT-Fenster-Feineinrastung für einen OFDM-Empfänger zur Rückgewinnung einer FFT-Fenster-Einrastung (schnelle Fouriertransformation FFT) unter Verwendung eines Symbols mit N effektiven Datenabtastungen und G ein Sicherheitsintervall darstellenden Abtastungen, umfassend:
einen Analog-Digital-Wandler (220) zur Umwandlung eines OFDM-Signals in komplexe Digitalabtastungen;
einen Symbolanfangs-Bestimmer (230) zur Bestimmung des Anfangsabschnittes eines Symbols unter den von dem Analog-Digital-Wandler ausgegebenen komplexen Digitalabtastungen;
einen FFT-Fenster-Regler (240) zur Auslösung einer FFT-Einheit entsprechend dem von dem Symbolanfangs-Bestimmer (230) bestimmten Symbolanfangsabschnitt; und
eine FFT-Einheit (250) zur schnellen Fouriertransformation der von dem Analog-Digital-Wandler ausgegebenen komplexen Digitalabtastungen entsprechend der Ausgabe des FFT-Fenster-Reglers (240);
**dadurch gekennzeichnet, dass**
die Vorrichtung einen Phasenberechner (260) zur Berechnung von Phasenschwankungen zwischen dem von der FFT-Einheit (250) ausgegebenen komplexen Wert und dem bekannten gesendeten komplexen Wert für den jeweiligen Unterträger aufweist;
die Vorrichtung einen Nulldurchgangs-Zähler (270) zur Zählung der Anzahl der Nulldurchgänge der von dem Phasenberechner berechneten Phasenschwankungen aufweist; und
der FFT-Fenster-Regler (240) für einen Ausgleich des Abtastfehlers der FFT-Einheit durch eine Bestimmung des restlichen FFT-Einrastfehlers einer Abtasteinheit aus der von dem Nulldurchgangs-Zähler gezählten Anzahl von Nulidurchgängen ausgelegt ist.

2. Vorrichtung zur Rückgewinnung einer FFT-Fenster-Feineinrastung nach Anspruch 1, wobei die Phasenschwankung des Phasenberechners (260) durch${\text{tan}}^{\text{-1}} {\text{{Im(Y}}_{\text{K}} {\text{·X}}_{\text{K}} {\text{*)/Re(Y}}_{\text{K}} {\text{·X}}_{\text{K}} \text{*)}}$ gegeben ist, wobei K die Nummer eines Unterträgers, X einen gesendeten komplexen sowie dem Sender und dem Empfänger bekannten Wert, Y einen empfangenen komplexen Wert, Re(...) den Realteil des komplexen Wertes, Im(...) den Imaginärteil des komplexen Wertes und * die Konjugierte des komplexen Wertes bezeichnen.

3. Vorrichtung zur Rückgewinnung einer FFT-Fenster-Feineinrastung nach einem der Ansprüche 1 oder 2, wobei der Nulldurchgangs-Zähler (270) den Nulldurchgangspunkt der durch die Nummern 1 bis N des Unterträgers nacheinander bestimmten Phasenschwankung zählt.

4. Vorrichtung zur Rückgewinnung einer FFT-Fenster-Feineinrastung nach einem der Ansprüche 1, 2 oder 3, wobei der Abtastfehler e des FFT-Fenster-Reglers (240) gleich (a+1)/2 ist, wobei a die Anzahl der Nulldurchgänge darstellt.

5. Vorrichtung zur Rückgewinnung einer FFT-Fenster-Feineinrastung nach einem der Ansprüche 1, 2, 3 oder 4, wobei der FFT-Fenster-Regler (240) das Vorzeichen eines FFT-Fenster-Einrastfehlers unter Verwendung der Vorzeichenänderung an der Stelle, an der der Nulldurchgang erfolgt, bestimmt.

6. Vorrichtung zur Rückgewinnung einer FFT-Fenster-Feineinrastung nach Anspruch 5, wobei der FFT-Fenster-Einrastfehler-Regler (240) für eine Bestimmung des Vorzeichens des Fehlers nach einer Subtraktion der Phasenschwankungswerte der Nummer 0 des Unterträgers von den Phasenschwankungswerten aller Nummern des Unterträgers ausgelegt ist.

7. Vorrichtung zur Rückgewinnung einer FFT-Fenster-Feineinrastung für einen OFDM-Empfänger zur Rückgewinnung einer FFT-Fenster-Einrastung (schnelle Fouriertransformation FFT) unter Verwendung eines Symbols mit N effektiven Datenabtastungen und G ein Sicherheitsintervall als eine Einheit darstellenden Abtastungen, umfassend:
einen Analog-Digital-Wandler (330) zur Umwandlung eines OFDM-Signals in komplexe Digitalabtastungen;
einen Symbolanfangs-Bestimmer (340) zur Bestimmung des Anfangsabschnittes eines Symbols unter den von dem Analog-Digital-Wandler ausgegebenen komplexen Digitalabtastungen;
einen FFT-Fenster-Regler (350) zur Auslösung einer FFT-Einheit (360) entsprechend dem von dem Symbolanfangs-Bestimmer bestimmten Symbolanfangsabschnitt; und
eine FFT-Einheit (360) zur schnellen Fouriertransformation der von dem Analog-Digital-Wandler (330) ausgegebenen komplexen Digitalabtastungen entsprechend der Ausgabe des FFT-Fenster-Reglers (350);
**dadurch gekennzeichnet, dass**
die Vorrichtung einen Nulldurchgangs-Zähler (370) zur Zählung der Anzahl der Nulldurchgänge der Amplitude zumindest einer Funktion aus der den Realteil des von der FFT-Einheit ausgegebenen komplexen Signals darstellenden Funktion und der den Imaginärteil des von der FFT-Einheit ausgegebenen komplexen Signals darstellenden Funktion aufweist; und
der FFT-Fenster-Regler (350) für einen Ausgleich des Abtastfehlers der FFT-Einheit (360) durch eine Bestimmung des restlichen FFT-Einrastfehlers einer Abtasteinheit aus der von dem Nulldurchgangs-Zähler (370) gezählten Anzahl von Nulldurchgängen ausgelegt ist.

8. Vorrichtung zur Rückgewinnung einer FFT-Fenster-Feineinrastung nach Anspruch 7, wobei der Abtastfehler e des FFT-Fenster-Reglers (350) gleich (r+1)/2 ist, wobei der Realteil ausgewählt ist, und wobei r die Anzahl der Nulldurchgänge der Amplitude des Realteils darstellt.

9. Vorrichtung zur Rückgewinnung einer FFT-Fenster-Feineinrastung nach Anspruch 7 oder 8, wobei der Abtastfehler e des FFT-Fenster-Reglers (350) gleich (i+1)/2 ist, wobei der Imaginärteil ausgewählt ist, und wobei i die Anzahl der Nulldurchgänge der Amplitude des Imaginärteils darstellt.

## Revendications

1. Dispositif de rétablissement de position de fenêtre FFT précis pour un récepteur OFDM (multiplexage par répartition orthogonale de la fréquence) destiné à rétablir une position de fenêtre de transformée de Fourier rapide (FFT) en utilisant un symbole incluant N échantillons de données effectifs et G échantillons représentant un intervalle de garde, comportant :
un convertisseur analogique-numérique (220) pour convertir un signal OFDM en échantillons numériques complexes,
un détecteur de début de symbole (230) pour détecter la partie de début du symbole parmi les échantillons numériques complexes délivrés en sortie par le convertisseur analogique-numérique,
un contrôleur de fenêtre FFT (240) pour activer des moyens FFT conformément à la partie de début de symbole détectée par le détecteur de début de symbole (230), et
des moyens FFT (250) pour convertir en Fourier rapide les échantillons numériques complexes générés par le convertisseur analogique-numérique conformément à la sortie du contrôleur de fenêtre FFT (240),
**caractérisé par** :
un calculateur de phase (260) pour calculer des variations de phase entre la valeur complexe délivrée en sortie par les moyens FFT (250) et la valeur complexe connue transmise de la sous-porteuse respective,
un compteur de passages par zéro (270) pour compter le nombre de passages par zéro des variations de phase générées par le calculateur de phase, et
ledit contrôleur de fenêtre FFT (240) étant conçu pour compenser l'erreur d'échantillon des moyens FFT en détectant l'erreur de position FFT restante d'une unité d'échantillon à partir du nombre de passages par zéro générés par le compteur de passages par zéro.

2. Dispositif de rétablissement de position de fenêtre FFT précis selon la revendication 1, dans lequel la variation de phase du calculateur de phase (260) est calculée par tan⁻¹{Im(Yₖ·X^{*}ₖ)/Re(Yₖ·X^{*}ₖ)} , où K, X, Y, Re(...) et Im(...), et * indiquent respectivement le numéro d'une sous-porteuse, une valeur complexe transmise qui est connue de l'émetteur et du récepteur, une valeur complexe reçue, la partie réelle et la partie imaginaire de la valeur complexe, et la conjuguée de la valeur complexe.

3. Dispositif de rétablissement de position de fenêtre FFT précis selon la revendication 1 ou 2, dans lequel le compteur de passages par zéro (270) compte le point de passage par zéro de la variation de phase séquentiellement détectée à travers les numéros 1 à N de la sous-porteuse.

4. Dispositif de rétablissement de position de fenêtre FFT précis selon la revendication 1, 2 ou 3, dans lequel l'erreur d'échantillon e du contrôleur de fenêtre FFT (240) est (a + 1)/2, où a est le nombre de passages par zéro.

5. Dispositif de rétablissement de position de fenêtre FFT précis selon la revendication 1, 2, 3 ou 4, dans lequel le contrôleur de fenêtre FFT (240) détermine un signe d'erreur de position de fenêtre FFT en utilisant le changement du signe de la position dans laquelle le passage par zéro est exécuté.

6. Dispositif de rétablissement de position de fenêtre FFT précis selon la revendication 5, dans lequel le contrôleur d'erreur de position de fenêtre FFT (240) est conçu pour déterminer ledit signe d'erreur après avoir soustrait les valeurs de variation de phase du numéro 0 de la sous-porteuse des valeurs de variation de phase de tous les numéros de la sous-porteuse.

7. Dispositif de rétablissement de position de fenêtre FFT précis pour un récepteur OFDM destiné à rétablir une position de fenêtre FFT en utilisant un symbole incluant N échantillons de données effectifs et G échantillons représentant un intervalle de garde en tant qu'unité, comportant :
un convertisseur analogique-numérique (330) pour convertir un signal OFDM en échantillons numériques complexes,
un détecteur de début de symbole (340) pour détecter la partie de début du symbole parmi les échantillons numériques complexes délivrés en sortie par le convertisseur analogique-numérique,
un contrôleur de fenêtre FFT (350) pour activer des moyens FFT (360) conformément à la partie de début de symbole détectée par le détecteur de début de symbole, et
des moyens FFT (360) pour convertir en Fourier rapide les échantillons numériques complexes générés par le convertisseur analogique-numérique (330) conformément à la sortie du contrôleur de fenêtre FFT (350),
**caractérisé par** :
un compteur de passages par zéro (370) pour compter le nombre de passages par zéro de l'amplitude d'au moins l'une parmi la fonction réalisant la partie réelle du signal complexe délivré par les moyens FFT et la fonction réalisant la partie imaginaire du signal complexe délivré en sortie par les moyens FFT, et
ledit contrôleur de fenêtre FFT (350) étant conçu pour compenser l'erreur d'échantillon des moyens FFT (360) en détectant l'erreur de position FFT restante d'une unité d'échantillon à partir du nombre de passages par zéro générés par le compteur de passages par zéro (370).

8. Dispositif de rétablissement de position de fenêtre FFT précis selon la revendication 7, dans lequel l'erreur d'échantillon e du contrôleur de fenêtre FFT (350) est (r + 1)/2 lorsque ladite partie réelle est sélectionnée, où r est le nombre de passages par zéro de l'amplitude de ladite partie réelle.

9. Dispositif de rétablissement de position de fenêtre FFT précis selon la revendication 7 ou 8, dans lequel l'erreur d'échantillon e du contrôleur de fenêtre FFT (350) est (i + 1)/2 lorsque ladite partie imaginaire est sélectionnée, où i est le nombre de passages par zéro de l'amplitude de ladite partie imaginaire.
